# EUROPÄISCHE PATENTANMELDUNG

(11) **EP 4 726 430 A1**
(43) Veröffentlichungstag der Anmeldung: **15.04.2026**
(21) Anmeldenummer: 25202931.9
(22) Anmeldetag: 18.09.2025
(51) Int. Cl.: G01S 7/481, G01S 17/48

(54) **REFLEXIONS-LICHTTASTER**

(30) Priorität: 08.10.2024 DE 102024128982
(71) Anmelder: SICK AG, 79183 Waldkirch (DE)
(72) Erfinder: Merettig, Gerhard, 79350 Sexau (DE); Auer, Patrick, 79183 Waldkirch (DE)
(74) Vertreter: Manitz Finsterwald Patent- und Rechtsanwaltspartnerschaft mbB

(57) **Zusammenfassung**

In einer Ausführungsform weist ein Reflexions-Lichttaster zur Erfassung mindestens eines Objekts in einem Überwachungsbereich einen Lichtsender zum Aussenden von Sendelicht in den Überwachungsbereich und einen Lichtempfänger zum Empfangen von Empfangslicht aus dem Überwachungsbereich auf. Der Reflexions-Lichttaster ist dazu eingerichtet ist, in dem Überwachungsbereich zumindest einen ersten Teilbereich und einen zweiten Teilbereich zu erzeugen, und Empfangslicht aus dem ersten Teilbereich als erstes Empfangslicht und Empfangslicht aus dem zweiten Teilbereich als zweites Empfangslicht zu erfassen. Des Weiteren ist der Reflexions-Lichttaster dazu eingerichtet, durch Ermitteln eines Intensitätsverhältnisses zwischen dem ersten und dem zweiten Empfangslicht ein Sensorsignal bereitzustellen, welches eine Funktion eines Abstands des mindestens einen Objekts von dem Reflexions-Lichttaster ist.

## Beschreibung

Die vorliegende Erfindung betrifft einen Lichttaster zur Erfassung mindestens eines Objekts in einem Überwachungsbereich.

Reflexions-Lichttaster sind optische, genauer optoelektronische, Sensoren zur berührungslosen Detektion von Personen und/oder Objekten. Für Reflexions-Lichttaster ist es bekannt, die Anwesenheit und/oder Entfernung von Gegenständen in einem Überwachungsbereich zu bestimmen, wobei der Reflexions-Lichttaster bevorzugt nach dem Triangulationsprinzip arbeitet. Ein Triangulationslichttaster umfasst insbesondere einen Lichtsender, beispielsweise eine Leuchtdiode oder einen Laser, und gegebenenfalls eine Sendeoptik, um einen Sendelichtstrahl in eine Detektionszone zu einem dort gegebenenfalls befindlichen, zu detektierenden Objekt auszusenden. Das Sendelicht kann von einem solchen Objekt als Empfangslicht remittiert, d.h. diffus oder spiegelnd reflektiert, und von einem Lichtempfänger detektiert werden, der zusammen mit einer Empfangsoptik eine Empfangseinheit bildet. Der Lichtempfänger umfasst bei bekannten Lösungen wenigstens eine Zeile von fotosensitiven Empfangselementen. Das ausgesendete Sensorlicht wird von einem Objekt remittiert und trifft, abhängig von der Entfernung, unter einem bestimmten Winkel auf ein Empfangselement. Anhand der Position des Lichtflecks auf dem Empfangselement lässt sich der Abstand des Objekts bestimmen. Bei der Autokollimation fallen Sendelichtpfad und Empfangslichtpfad zumindest abschnittsweise, beispielsweise zumindest im Überwachungsbereich des Sensors, zusammen, oder überlagern sich. Die vorliegende Anmeldung bezieht sich auf Reflexions-Lichttaster, die nach dem Autokollimationsprinzip arbeiten. Lichttaster nach dem Triangulationsprinzip und Reflexionslichtschranken nach dem Autokollimationsprinzip sind im industriellen Umfeld, beispielsweise in der Industrieautomation, weit verbreitet.

In diesem Anwendungsbereich kann es erforderlich sein, Objekte oder Personen nur dann zu erkennen, wenn sie sich in einem bestimmten, meist einstellbaren, Abstandsbereich vor dem Sensor befinden. Triangulationsbasierte Lichttastern haben den Nachteil, dass der Empfänger zumeist einen großen Öffnungsbereich aufweist, weshalb er aus vielen Richtungen gestört werden kann. Zudem werden bei der Triangulation jeweils eine Linse für den Sender und eine weitere Linse für den Empfänger benötigt.

Daher besteht eine Aufgabe darin, einen Reflexions-Lichttaster anzugeben, der gegenüber dem Stand der Technik verbesserte Eigenschaften aufweist, insbesondere soll der Lichttaster unempfindlicher gegenüber optisch aktiven und passiven Störungen sein.

Diese Aufgabe wird durch den Reflexions-Lichttaster gemäß Anspruch 1 gelöst. Vorteilhafte Weiterbildungen und Ausgestaltungen der Erfindung sind der Beschreibung, den Zeichnungen sowie den abhängigen Patentansprüchen zu entnehmen.

In einer Ausführungsform weist ein Reflexions-Lichttaster zur Erfassung mindestens eines Objekts in einem Überwachungsbereich einen Lichtsender zum Aussenden von Sendelicht in den Überwachungsbereich und einen Lichtempfänger zum Empfangen von Empfangslicht aus dem Überwachungsbereich auf. Der Reflexions-Lichttaster ist dazu eingerichtet, in dem Überwachungsbereich zumindest einen ersten Teilbereich und einen zweiten Teilbereich zu erzeugen. Der Lichtempfänger ist dazu eingerichtet, Empfangslicht aus dem ersten Teilbereich als erstes Empfangslicht und Empfangslicht aus dem zweiten Teilbereich als zweites Empfangslicht zu erfassen. Des Weiteren ist der Reflexions-Lichttaster dazu eingerichtet, durch Ermitteln eines Intensitätsverhältnisses zwischen dem ersten und dem zweiten Empfangslicht ein Sensorsignal bereitzustellen, welches eine Funktion eines Abstands des mindestens einen Objekts von dem Reflexions-Lichttaster ist.

Der Reflexions-Lichttaster erzeugt im Überwachungsbereich einen ersten und einen zweiten Teilbereich. Dabei kann der erste Teilbereich den zweiten Teilbereich teilweise überlappen, jedoch lediglich insoweit, dass zumindest ein Teil des zweiten Teilbereichs von dem ersten Teilbereich verschieden ist. Alternativ kann der erste Teilbereich von dem zweiten Teilbereich gänzlich verschieden sein. Das erste Empfangslicht wird separat von dem zweiten Empfangslicht erfasst. Das Verhältnis der Intensitäten des ersten und zweiten Empfangslichts ist eine Indikation für den Abstand des Objekts, welches der Reflexions-Lichttaster in seinem Überwachungsbereich detektiert.

Durch die Erzeugung des ersten und des zweiten Teilbereichs im Überwachungsbereich und die dementsprechende Detektion des ersten und zweiten Empfangslichts aufgrund von Remission an dem Objekt im Überwachungsbereich ist das Verhältnis der Intensitäten dieser Empfangslichter abhängig vom Abstand des Objekts zum Lichttaster.

Insbesondere kann das jeweilige Empfangslicht auch in ein Empfangssignal umgewandelt werden, beispielsweise durch den Lichtempfänger, wobei das Empfangssignal die Intensität des jeweiligen Empfangslichts (also des ersten oder zweiten Empfangslichts) angibt. Alternativ kann das jeweilige Empfangslicht als ein Empfangssignal bezeichnet werden.

In anderen Worten kann aus dem Vergleich des ersten Empfangslichts mit dem zweiten Empfangslicht auf den Abstand des detektierten Objekts geschlossen werden. Dadurch, dass der Abstand des Objekts zum Sensor, also zum Reflexions-Lichttaster, mit eben diesem Lichttaster genau bestimmt werden kann, kann die Detektion auf Objekte in einem bestimmten Abstand vor dem Sensor begrenzt werden und Objekte, die außerhalb dieses Bereichs im Überwachungsbereich erscheinen, beispielsweise weiter entfernt sind, also im Hintergrund, oder näher vor dem Sensor liegen, also im Vordergrund, können ausgeblendet werden. Durch die Verhältnisbildung, also den Vergleich des ersten Empfangslichts mit dem zweiten Empfangslicht besteht lediglich eine geringe Abhängigkeit von Objektkontrasten, also Schwarz-Weiß-Kanten, da nur das Verhältnis der Intensitäten von erstem und zweitem Empfangslicht ermittelt und ausgewertet werden. Zudem besteht lediglich eine geringe Abhängigkeit von Glanz auf der Oberfläche des Objekts, da auch bei glänzenden Objektoberflächen das Intensitäts- bzw. Energieverhältnis ähnlich bleibt.

Dabei bezieht sich die Intensität jeweils auf die Lichtintensität des ersten oder zweiten Empfangslichts. Gemeint ist eine Bestrahlungsstärke, also die Leistung der elektromagnetischen Strahlung des ersten oder zweiten Empfangslichts bezogen auf die Fläche des Lichtempfängers, auf den die Strahlung trifft.

Gemäß einer Weiterbildung ist das Intensitätsverhältnis als Quotient aus dem zweiten und dem ersten Empfangslicht gebildet. Alternativ ist das Intensitätsverhältnis als Differenz, insbesondere als gewichtete Differenz, aus dem zweiten und dem ersten Empfangslicht gebildet. Das Sensorsignal ist als Ergebnis eines Vergleichs des Quotienten mit einer einstellbaren Schaltschwelle des Reflexions-Lichttasters bereitgestellt. In der alternativen Ausführungsform ist das Sensorsignal als Ergebnis eines Vergleichs der Differenz, bzw. der gewichteten Differenz, mit der einstellbaren Schaltschwelle bereitgestellt.

Die Schaltschwelle wird dabei so eingestellt, dass sie einem gewünschten Schaltabstand des Reflexions-Lichttasters entspricht, also einem Abstand von dem Lichttaster, in welchem die Detektion eines Objekts den Taster und insbesondere einen Schaltausgang des Tasters auslösen soll.

Beispielsweise wird die Intensität des zweiten Empfangslichts durch die Intensität des ersten Empfangslichts dividiert und mit der Schaltschwelle verglichen. Im Ergebnis kann das Sensorsignal beispielsweise eine logische Null oder einen Low-Pegel aufweisen, sofern dieser Quotient kleiner als die Schaltschwelle ist. Im gegenteiligen Fall, also wenn der Quotient gleich der Schaltschwelle oder größer als dieselbe ist, kann das Sensorsignal eine logische Eins oder einen High-Pegel aufweisen.

In einer alternativen Realisierung wird die Intensität des ersten Empfangslichts von der Intensität des zweiten Empfangslichts subtrahiert. Optional kann die Intensität des ersten Empfangslichts vor der Subtraktion noch mit einem Faktor multipliziert werden. In beiden Fällen wird das Differenzsignal mit der einstellbaren Schaltschwelle verglichen. So kann beispielsweise aufgrund des Vergleichs das Sensorsignal eine logische Null führen, wenn das Differenzsignal kleiner als die Schaltschwelle ist. Sofern das Differenzsignal gleich oder größer als die Schaltschwelle ist, weist das Sensorsignal eine logische Eins auf. Wird ein Faktor zur Multiplikation verwendet, so könnte dieser gemäß des gewünschten Schaltabstands gewählt werden und die Schaltschwelle auf Null gesetzt werden.

Andere Möglichkeiten zur Bestimmung des Intensitätsverhältnisses unterliegen dem fachmännischen Können und fallen ebenfalls unter den Schutzbereich der vorliegenden Ansprüche.

Gemäß einer Weiterbildung umfasst die Schaltschwelle eine Hysterese.

Damit wird vorteilhafterweise die Detektion des Objekts nicht allein abhängig von dem Erscheinen eines Objekts an der exakten, durch die Schaltschwelle definierten Position, sondern hängt auch von dem vorigen Zustand des Sensorsignals ab. Damit wird die Zuverlässigkeit der Detektion noch weiter erhöht und ein durch Rauschen bedingtes wiederholtes Umschalten, im Extremfall ein Oszillieren, des Sensorsignals verhindert.

In einer Weiterbildung nimmt eine Größe einer Querschnittsfläche des zweiten Teilbereichs mit einer Vergrößerung eines Abstands zu dem Reflexions-Lichttaster zu. Eine Größe einer Querschnittsfläche des ersten Teilbereichs nimmt mit einer Vergrößerung des Abstands zu dem Reflexions-Lichttaster ab oder bleibt im Wesentlichen gleich oder nimmt, insbesondere wesentlich, schwächer zu als die Größe des zweiten Teilbereichs bei derselben Vergrößerung des Abstands zu dem Reflexions-Lichttaster. Unter "wesentlich schwächer" ist beispielsweise zu verstehen, dass die Größe der Querschnittsfläche des ersten Teilbereichs zumindest um den Faktor 2, den Faktor 5 oder den Faktor 10 weniger stark zunimmt als die Querschnittsfläche des zweiten Teilbereichs.

Beispielsweise wird das erste Empfangslicht bei der Ermittlung des Intensitätsverhältnisses als Referenz benutzt. Aufgrund der erfindungsgemäßen Ausgestaltung des im Überwachungsbereich erzeugten ersten und zweiten Teilbereichs, wird ein Anteil des zweiten Empfangslichts, welcher von dem Lichtempfänger erfasst wird, mit Vergrößerung eines Abstands eines Objekts von dem Lichttaster im Verhältnis zu dem erfassten Intensitätsanteil des ersten Empfangslichts kleiner.

Die Querschnittsfläche eines Teilbereichs bezeichnet dabei jeweils eine von dem Teilbereich eingenommene Fläche, welche senkrecht zur Ausbreitungsrichtung, also zur optischen Achse, des Sendelichts ist.

In einer Weiterbildung umfasst der Lichtsender eine erste und eine zweite Sendeeinheit. Die erste Sendeeinheit ist zum Aussenden eines ersten Sendelichtstrahls eingerichtet, welcher den ersten Teilbereich bildet. Die zweite Sendeeinheit ist zum Aussenden eines zweiten Sendelichtstrahls eingerichtet, welcher den zweiten Teilbereich bildet. Dabei weist der erste Sendelichtstrahl eine Querschnittsfläche auf, die sich von einer Querschnittsfläche des zweiten Sendelichtstrahls unterscheidet. Eine jeweilige Intensität des ersten und des zweiten Empfangslichts ist dabei jeweils eine Funktion der jeweiligen Querschnittsfläche des ersten oder zweiten Sendelichtstrahls sowie einer Remission des ersten und des zweiten Sendelichtstrahls an dem Objekt.

Remission bezieht sich dabei auf ein diffuses Zurückwerfen oder auch ein spiegelndes Reflektieren. Unter dem Begriff "Licht" wird hier nicht nur sichtbare, d.h. für das menschliche Auge wahrnehmbare, elektromagnetische Strahlung verstanden, sondern jegliche Form von optischer Strahlung, d.h. insbesondere auch ultraviolettes oder infrarotes Licht, verstanden.

Gemäß dieser Ausführungsform wird der erste und der zweite Teilbereich in dem Überwachungsbereich durch das Aussenden des ersten und des zweiten Sendelichtstrahls durch den Lichtsender des Reflexions-Lichttasters erreicht. Die Querschnittsfläche eines Sendelichtstrahls bezeichnet dabei jeweils eine von dem Sendelichtstrahl ausgeleuchtete Fläche, welche senkrecht zur Ausbreitungsrichtung, also zur optischen Achse, des Sendelichtstrahls ist. Sie kann auch als Spot bezeichnet werden. Wird beispielsweise je eine kreisförmigen Lichtquelle zur Implementierung der ersten und/oder zweiten Sendeeinheit verwendet, repräsentiert ein Kreis die Querschnittsfläche des jeweils resultierenden Sendelichtstrahls. In anderen Worten weist der Lichtsender dieser Ausführungsform zwei Sendeeinheiten, beispielsweise Lichtquellen, auf, die jeweils einen Teilbereich des Überwachungsbereichs beleuchten und damit den ersten und zweiten Teilbereich bilden.

In einer Weiterentwicklung werden der erste Sendelichtstrahl und der zweite Sendelichtstrahl zumindest zeitweise alternierend gesendet.

Beispielsweise wird abwechselnd jeweils ein Puls des ersten Sendelichtstrahls und ein Puls des zweiten Sendelichtstrahls gesendet. Beim Lichtempfänger kann somit in einfacher Art und Weise zwischen dem ersten und dem zweiten Empfangslicht unterschieden werden und somit die Detektionsgenauigkeit erhöht werden. Dafür ist lediglich ein Empfangskanal erforderlich, was eine platzsparende und kostengünstige Realisierung ermöglicht. In einem anderen Beispiel wird zuerst nur eine Sendeeinheit, beispielsweise die erste Sendeeinheit, aktiviert und anschließend beide Sendeeinheiten gleichzeitig aktiviert.

In einer alternativen Realisierung umfasst der erste Sendelichtstrahl einen ersten Wellenlängenbereich, und der zweite Sendelichtstrahl umfasst einen zweiten Wellenlängenbereich, welcher sich von dem ersten Wellenlängenbereich unterscheidet. Es werden also zwei unterschiedliche Lichtfarben eingesetzt, sodass auch das Empfangslicht mit zwei unterschiedlichen Lichtfarben den Lichtempfänger erreicht. Der Lichtempfänger kann insbesondere ausgebildet sein, die zwei unterschiedlichen Lichtfarben bzw. Empfangslicht des ersten Wellenlängenbereichs und Empfangslicht des zweiten Wellenlängenbereichs zu unterscheiden. Zu diesem Zweck kann der Reflexions-Lichttaster einen Lichtempfänger mit getrennten Zonen für jeden Wellenlängenbereich verwendet, wodurch eine zeitgleiche Detektion des ersten und zweiten Empfangslichts unter Beibehalten der Genauigkeit ermöglicht wird. Ein solcher Lichtempfänger kann die Wellenlängentrennung z.B. durch unterschiedliche Wannentiefen oder durch eine beispielsweise schachbrettartige Aufteilung mit entsprechenden Transmissionsfilter erzeugen. Bei der schachbrettartigen Aufteilung der Empfängerfläche, auf welcher die lichtempfindlichen Empfangselemente angeordnet sein können, erhalten alle "schwarzen Felder" einen ersten Wellenlängenfilter und sind bevorzugt zusammengeschaltet und die "weißen Felder" erhalten einen zweiten Wellenlängenfilter und sind bevorzugt ebenfalls zusammengeschaltet.

Gemäß einer Weiterbildung ist eine Position innerhalb des Lichtsenders, an welcher die erste Sendeeinheit angeordnet ist, an eine Position innerhalb des Lichtsenders, an welcher die zweite Sendeeinheit angeordnet ist, angepasst.

Der erste und der zweite Sendelichtstrahl werden folglich nahezu von derselben Position innerhalb des Reflexions-Lichttasters, bzw. durch dieselbe Öffnung, ausgestrahlt. Bei einem Objekt, welches sich direkt vor dem Lichttaster befindet, also den Abstand Null hat, stimmt die Intensität des ersten Empfangslicht mit der Intensität des zweiten Empfangslichts überein. Damit wird eine bessere Vergleichbarkeit des ersten und des zweiten Empfangslichts erreicht.

Gemäß einer Weiterbildung ist eine Größe der Querschnittsfläche des zweiten Sendelichtstrahls größer als ein Sichtbereich des Lichtempfängers. Eine Größe des Sichtbereichs des Lichtempfängers ist an eine Größe der Querschnittsfläche des ersten Sendelichtstrahls angepasst.

Mit anderen Worten besitzt der Lichtempfänger eine Öffnung ähnlicher oder gleicher Größe wie die Größe der Querschnittsfläche des ersten Sendelichtstrahls. Die Größe der Querschnittsfläche des zweiten Sendelichtstrahls ist im Vergleich dazu größer. Der erfindungsgemäße Lichttaster hat folglich einen sehr engen Sichtbereich, wodurch ein Abstand eines detektierten Objekts zu dem Lichttaster mit hoher Genauigkeit bestimmt werden kann und eine Hintergrundausblendung sichergestellt ist. Optische Störungen sowohl aktiver als auch passiver Natur beeinträchtigen das Detektionsergebnis nicht. Eine von einer glänzenden Objektoberfläche verursachte Umspiegelung ist wegen des geringen Öffnungswinkels des Empfängers weniger kritisch.

Gemäß einer Weiterbildung wird der erste Sendelichtstrahl entlang einer ersten optischen Achse ausgesendet. Der zweite Sendelichtstrahl wird entlang einer zweiten optischen Achse ausgesendet, welche mit der ersten optischen Achse im Wesentlichen übereinstimmt oder parallel zu dieser verläuft.

Der erste und der zweite Sendelichtstrahl werden also im Wesentlichen in dieselbe Richtung, also in Richtung des Überwachungsbereichs des Reflexions-Lichttasters, ausgestrahlt.

Gemäß einer Weiterbildungsmöglichkeit umfasst die erste Sendeeinheit eine erste Leuchtdiode. Die zweite Sendeeinheit umfasst eine zweite Leuchtdiode. Dabei ist die erste Leuchtdiode konzentrisch zur zweiten Leuchtdiode angeordnet. Alternativ ist die erste Leuchtdiode als eine erste Zone und die zweite Leuchtdiode als eine zweite Zone einer Mehrzonenleuchtdiode realisiert.

Dabei werden die Leuchtdioden in Bezug auf ihre Größe, also den Querschnitt der Abstrahlfläche, jeweils so gewählt oder dimensioniert, dass der erste und der zweite Sendelichtstrahl wie oben beschrieben unterschiedliche Querschnittsflächen aufweisen. Beispielsweise ist eine Fläche der zweiten Leuchtdiode größer, beispielsweise um den Faktor vier, als eine Oberfläche der ersten Leuchtdiode.

Gemäß einer Weiterbildung umfasst der Lichtempfänger ein lichtempfindliches Empfangselement, welches zum Empfangen des ersten und zweiten Empfangslichts eingerichtet ist.

Der erfindungsgemäße Reflexions-Lichttaster bildet demgemäß eine Autokollimationsanordnung. Das von dem Lichtsender beispielsweise in Form der ersten und zweiten Sendelichtstrahlen ausgestrahlte Sendelicht wird von einem Objekt im Überwachungsbereich remittiert und gemäß dem Kollimationsprinzip als erstes und zweites Empfangslicht zum Lichtempfänger zurückgeführt.

Gemäß einer Ausführungsform weist der Lichtempfänger ein Übersprechfilterelement auf. In einer möglichen Realisierung umfasst das Übersprechfilterelement ein Polfilter. In einer alternativen Realisierungsmöglichkeit weist das Übersprechfilterelement ein weiteres lichtempfindliches Empfangselement auf, welches zum Erfassen von Streulicht eingerichtet ist.

Zur Vermeidung von Übersprechen zwischen Lichtsender und Lichtempfänger sind erfindungsgemäß zwei Möglichkeiten vorgesehen, nämlich der Einsatz eines Polfilters, wie dies in ähnlicher Art und Weise bei Reflexionslichtschranken eingesetzt wird. Alternativ wird mittels des weiteren lichtempfindlichen Empfangselements, welches beispielsweise eine Fotodiode umfasst, das durch Übersprechen verursachte Streulicht selbst gemessen und kann anschließend in dem erfindungsgemäßen Lichttaster bei der Bereitstellung des Sensorsignals berücksichtigt bzw. kompensiert werden. Dazu wird das weitere lichtempfindliche Empfangselement beispielsweise außerhalb eines erwarteten Empfangsorts des ersten und des zweiten Empfangslichts angeordnet. Mit Vorteil wird bei dieser Alternative das Sende- und Empfangslicht nicht gedämpft.

Gemäß einer Ausführungsform umfasst das lichtempfindliche Empfangselement eine erste Fotodiode. Alternativ umfasst das lichtempfindliche Empfangselement die erste Fotodiode und eine zweite Fotodiode. Dabei sind erste und zweite Fotodiode konzentrisch zueinander angeordnet, und/oder als jeweils ein Segment einer Mehrsegmentfotodiode realisiert. Gemäß einer weiteren Alternative umfasst das lichtempfindliche Empfangselement die erste, die zweite und eine dritte Fotodiode. Die dritte Fotodiode ist zum Erfassen von Streulicht eingerichtet. Die erste und die zweite Fotodiode sind konzentrisch zueinander angeordnet und die dritte Fotodiode ist konzentrisch zu der ersten und der zweiten Fotodiode angeordnet, beziehungsweise sind die erste, die zweite und die dritte Fotodiode jeweils als ein Segment der Mehrsegmentfotodiode realisiert.

Das lichtempfindliche Empfangselement des Lichtempfängers kann dementsprechend in unterschiedlicher Art und Weise implementiert werden und ist dabei angepasst an eine Realisierung des Lichtsenders. Wird beispielsweise der erste Sendelichtstrahl alternierend zum zweiten Sendelichtstrahl ausgesendet, beispielsweise dadurch, dass die erste und die zweite Sendeeinheit abwechselnd aktiviert werden, wird lediglich die erste Fotodiode benötigt, um das erste und das zweite Empfangslicht zu erfassen und daraus ein jeweiliges Empfangssignal zu erzeugen. Auch in dem Fall, dass zuerst nur die erste Sendeeinheit aktiviert wird und dann erste und zweite Sendeeinheiten zusammen aktiviert werden, wird lediglich die ersten Fotodiode benötigt, um das erste und zweite Empfangslicht zu erfassen und ein Intensitätsverhältnis bereitzustellen. Im ersten Fall wird vorteilhafterweise das Signal der zweiten Sendeeinheit über den Abstand zum Lichttaster stärker reduziert, während im zweiten Fall das Verhältnis der beiden Empfangslichter weniger von einer Abdeckung des Überwachungsbereichs durch das Objekt abhängt. Das heißt, dass ein Objekt, welches nur teilweise im Sichtfeld des Reflexions-Lichttasters ist, annähernd das gleiche Intensitätsverhältnis erzeugt, wie ein Objekt, welches vollständig erfasst wird.

Gemäß der zweiten Alternative umfasst das Empfangselement zwei Fotodioden, wobei mit der ersten Fotodiode das erste Empfangslicht erfasst wird und mit der zweiten Fotodiode das zweite Empfangslicht erfasst wird. Dies wird für eine Ausführungsform benötigt, bei der der erste und der zweite Sendelichtstrahl überwiegend zeitgleich abgestrahlt werden oder der erste und zweite Sendelichtstrahl sogar gemeinsam, insbesondere als ein gemeinsamer Strahl, abgestrahlt wird. Die Fotodioden können dabei entweder separat implementiert sein und so zueinander angeordnet sein, dass die erste Fotodiode bei einer kreisförmigen Ausführung nahe dem Zentrum der optischen Achse des ersten Empfangslichts angeordnet ist und die zweite Fotodiode bei einer ringförmigen Ausführung die erste Fotodiode umschließt. Alternativ werden beide Fotodioden in einem einzigen Bauelement, nämlich der Mehrsegmentfotodiode, realisiert. Die Anordnung der Segmente, sowie deren Ausführung kann analog zur beschriebenen Anordnung bei separaten Fotodioden umgesetzt sein. Zusätzlich kann für beide Alternativen jeweils die dritte Fotodiode vorgesehen sein, die das Streulicht erfasst, und damit ein aktives Kompensieren des Übersprechens realisieren kann. Dabei kann die dritte Fotodiode entweder als separates Bauteil konzentrisch zur ersten und insbesondere zweiten Fotodiode angeordnet oder als ein weiteres Segment der Mehrsegmentfotodiode realisiert sein. Die dritte Fotodiode ist eine mögliche Realisierung des Übersprechfilterelements.

Gemäß einer weiteren Ausführungsform umfasst der Lichtempfänger einen Strahlleiter, welcher dazu angeordnet und eingerichtet ist, das erste und das zweite Empfangslicht auf das lichtempfindliche Empfangselement zu leiten. Alternativ ist der Lichtempfänger koaxial zu dem Lichtsender angeordnet und weist mindestens eine Linse auf, welche dazu ausgelegt ist, in zumindest einem Teilbereich den ersten und zweiten Sendelichtstrahl von dem Empfangslicht abzuschirmen.

Der Lichtempfänger umfasst also entweder einen Strahlteiler, beispielsweise einen halb durchlässigen Spiegel, welcher so in einem Sendelichtpfad und einem Empfangslichtpfad des Lichttasters angeordnet ist, dass der erste und der zweite Sendelichtstrahl diesen Spiegel passieren oder durchtreten, während das erste und das zweite Empfangslicht in einem geeigneten Winkel in bekannter Art und Weise auf das lichtempfindliche Empfangselement geleitet wird. Alternativ können das erste und zweite Empfangslicht, sowie das Streulicht mithilfe eines Lichtleiters auf das lichtempfindliche Empfangselement geleitet werden.

Bei einer Realisierung ohne Strahlteiler ist der Lichtempfänger koaxial zu dem Lichtsender angeordnet. Dabei fallen die optischen Achsen von Lichtsender und Lichtempfänger zusammen. Für diese Ausführungsalternative ist mindestens eine Linse vorgesehen, bei der ein Bereich, beispielsweise der innere, zentrumnahe Bereich, optisch abgeschirmt von dem ersten und zweiten Sendelichtstrahl für das erste und zweite Empfangslicht eingesetzt wird. Beispielsweise kann eine Linse eingesetzt werden, welche kreisförmig ausgeführt ist, bei der ein innerer Bereich mit einem gewissen Radius um den Mittelpunkt des Kreises als Empfängerlinse benutzt wird. Dieser mittlere Bereich kann auch sternförmig ausgeführt werden, wodurch vorteilhafterweise ein Nahblindbereich des Lichttasters reduziert wird, da die Grenzlinie zwischen Sende- und Empfangsöffnung durch die Sternform verlängert wird.

In einer alternativen Ausführungsform weist der Lichtsender eine Sendeöffnung zum Aussenden des Sendelichts auf. Der Lichtempfänger weist zum Empfangen des ersten Empfangslichts eine erste Empfangsöffnung auf und zum Empfangen des zweiten Empfangslichts eine zweite Empfangsöffnung. Dabei ist eine Größe der ersten Empfangsöffnung an eine Größe der Sendeöffnung angepasst. Eine Größe der zweiten Empfangsöffnung übersteigt die Größe der ersten Empfangsöffnung. Eine jeweilige Intensität des ersten und des zweiten Empfangslichts ist jeweils eine Funktion der jeweiligen Größe der ersten oder zweiten Empfangsöffnung und der Remission des Sendelichts an dem Objekt.

In dieser Ausführungsform ist lediglich ein Lichtsender vorgesehen, welcher das Sendelicht erzeugt. Ein Ausleuchtungsbereich des Sendelichts fällt in diesem Fall nahezu mit einem Lichtbereich des Lichttasters zusammen. Der erste und der zweite Teilbereich wird im Überwachungsbereich dadurch erzeugt, dass die erste und die zweite Empfangsöffnung vorgesehen sind, welche die beschriebenen unterschiedlichen Größen aufweisen. Auf diese Art und Weise werden wieder zwei Empfangssignale erfasst, deren Intensitätsverhältnis eine Abstandsindikation für das Objekt liefert.

Auch mit dieser alternativen Realisierung ist es möglich, eine zuverlässige Hintergrundausblendung zu realisieren, so dass der erfindungsgemäße Lichttaster lediglich dann schaltet, wenn sich ein Objekt in dem einstellbaren Abstandsbereich befindet.

Bei dieser Alternative wird der erste und der zweite Teilbereich durch die unterschiedlichen Empfangsöffnungen erzeugt.

Vorteilhafterweise können zusätzlich die Linsen und die in der ersten und zweiten Sendeeinheit eingesetzten Leuchtdioden annähernd kreisrund ausgeführt sein, wodurch eine Richtungsabhängigkeit der Detektion weiter reduziert wird.

Nachfolgend wird die Erfindung rein beispielhaft unter Bezugnahme auf die Zeichnungen beschrieben. Funktions- bzw. wirkungsgleiche Zeichnungselemente tragen gleiche Bezugszeichen. Es zeigen:
- Fig. 1: eine beispielhafte schematische Darstellung eines Reflexions-Lichttasters wie vorgeschlagen,
- Fig. 2: eine zweite beispielhafte schematische Darstellung des Reflexions-Lichttasters wie vorgeschlagen,
- Fig. 3A und 3B: jeweils einen beispielhaften Strahlenquerschnitt,
- Fig. 4: eine schematische Darstellung eines Ausführungsbeispiels eines Lichtsenders wie vorgeschlagen,
- Fig. 5: eine weitere beispielhafte Darstellung des Reflexions-Lichttasters wie vorgeschlagen,
- Fig. 6: eine schematische Darstellung eines Lichtempfängers wie vorgeschlagen, und
- Fig. 7: eine weitere beispielhafte Darstellung des Reflexions-Lichttasters wie vorgeschlagen,
- Fig. 8A, 8B und 8C: jeweils eine schematische Darstellung einer Frontansicht des vorgeschlagenen Reflexions-Lichttasters, und
- Fig. 9: eine weitere beispielhafte Ausführungsform eines Reflexions-Lichttasters wie vorgeschlagen.

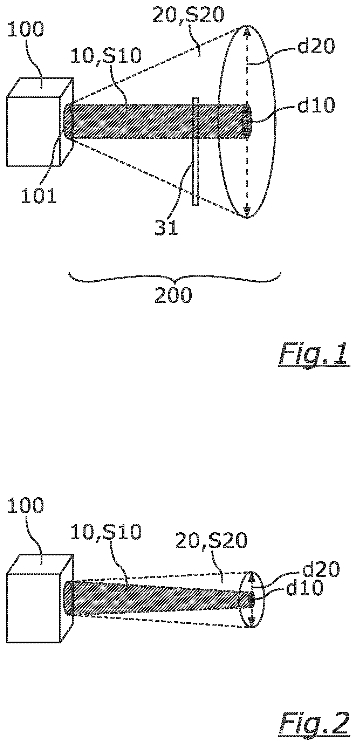

Fig. 1 zeigt eine schematische Darstellung einer beispielhaften Ausführungsform eines Reflexions-Lichttasters wie vorgeschlagen. Der Reflexions-Lichttaster 100 ist hier als sogenannte Blackbox dargestellt und ist zur Erfassung mindestens eines Objekts 31 in einem Überwachungsbereich 200 eingerichtet. Der Reflexions-Lichttaster 100 ist ferner dazu eingerichtet, in dem Überwachungsbereich 200 einen ersten Teilbereich 10 und einen zweiten Teilbereich 20 zu erzeugen. Der Reflexions-Lichttaster 100 umfasst einen hier nicht gezeigten Lichtsender zum Aussenden von Sendelicht in den Überwachungsbereich 200 und einen hier ebenfalls nicht gezeigten Lichtempfänger zum Empfangen von Empfangslicht aus dem Überwachungsbereich 200. Im gezeigten Beispiel der Fig. 1 wird der erste Teilbereich 10 durch Aussenden eines ersten Sendelichtstrahls S10 erzeugt. Der zweite Teilbereich 20 wird durch Aussenden des zweiten Sendelichtstrahls S20 erzeugt. Durch Remission bzw. Reflexion an dem Objekt 31 im Überwachungsbereich 200 erfasst der Lichttaster 100 erstes Empfangslicht aus dem ersten Teilbereich 10 und zweites Empfangslicht aus dem zweiten Teilbereich 20. Durch Ermittlung eines Intensitätsverhältnisses zwischen dem ersten und dem zweiten Empfangslicht stellt der Lichttaster 100 ein Sensorsignal bereit. Dieses Sensorsignal entspricht einem Abstand des Objekts 31 von dem Reflexions-Lichttaster 100.

Beispielsweise werden der erste und der zweite Sendelichtstrahl S10, S20 abwechselnd gesendet. Der Lichtempfänger hat eine ähnliche Öffnung wie ein Durchmesser d10 des ersten Sendelichtstrahls S10. Somit erhält der Empfänger des Lichttasters 100 nach Remission am Objekt 31 nahezu das volle Signal des reflektierten Sendelichtstrahls S10 als erstes Empfangslicht, welches als Referenz benutzt wird. Ferner erhält der Empfänger des Lichttasters 100 einen Teil des reflektierten zweiten Sendesignallichts S20 als zweites Empfangslicht. Je größer der Abstand des Objekts 31 zum Lichttaster 100 ist, desto kleiner wird der Anteil, der aufgrund der Remission des zweiten Sendelichtstrahls S20 als zweites Empfangslicht detektiert wird. Dabei werden wie dargestellt der erste und der zweite Sendelichtstrahl S10, S20 nahezu oder tatsächlich aus derselben Öffnung 101 emittiert. Wie beschrieben ermittelt der Lichttaster 100 das Intensitätsverhältnis als Quotient oder Differenz zwischen dem zweiten und dem ersten Empfangslicht. Zum Bereitstellen des Sensorsignals wird das Intensitätsverhältnis mit einer einstellbaren Schwelle, die in etwa der Schaltschwelle des Reflexions-Lichttasters 100 entspricht, verglichen. Die Schwelle kann zusätzlich mit einer Hysterese versehen sein, so dass ein Rauschen nicht zu einem Oszillieren des Sensorsignals zwischen ein- und ausgeschaltetem Zustand führt.

Die Größe der Querschnittsfläche des zweiten Teilbereichs 20 ist hier repräsentiert durch den zweiten Durchmesser d20. Es ist zu erkennen, dass der zweite Durchmesser d20, welcher durch einen Schnitt durch den zweiten Sendelichtstrahl S20, welcher senkrecht zur Ausbreitung des Lichtstrahls durchgeführt wird, zu erhalten ist, mit Vergrößerung des Abstandes zum Reflexions-Lichttaster 100 zunimmt. Demgegenüber bleibt eine Größe einer Querschnittsfläche des ersten Teilbereichs 10, welcher hier repräsentiert ist, durch den ersten Durchschnitt d10 des ersten Sendelichtstrahls S10, welcher senkrecht zur Ausbreitungsrichtung des ersten Sendelichtstrahls S10 gebildet wird, mit Vergrößerung des Abstands zu dem Lichttaster 100 im Wesentlichen gleich oder nimmt ab.

Mit Vorteil ist der Sichtbereich des Lichtempfängers des vorgeschlagenen Lichttasters 100 eng, wodurch Störeinflüsse von optisch aktiven Störern und Reflexionen im Umfeld des Sensors reduziert werden. Werden der erste und der zweite Sendelichtstrahl S10, S20 abwechselnd gesendet, ist es möglich, den Lichtempfänger einkanalig auszuführen. Durch den Vergleich des ersten Empfangslichts mit dem zweiten Empfangslicht besteht lediglich eine geringe Abhängigkeit von Objektkontrasten, also Schwarz-Weiß-Kanten, da eben nur das Verhältnis der Intensitäten von erstem und zweitem Empfangslicht ermittelt und ausgewertet werden. Zudem besteht lediglich eine geringe Abhängigkeit von Glanz auf der Oberfläche des Objekts 31, da auch bei glänzenden Objektoberflächen das Intensitäts- bzw. Energieverhältnis ähnlich bleibt. Selbst bei einem seitlichen Hineinbewegen des Objekts 31 in den Überwachungsbereich 200 entsteht keine Vorzugsrichtung, wie dies im Stand der Technik der Fall ist.

Fig. 2 zeigt eine schematische Darstellung eines weiteren Ausführungsbeispiels eines Reflexions-Lichttasters wie vorgeschlagen. Die Ausführungsform stimmt mit der Abbildung aus Fig. 1 überein, wobei jedoch in Fig. 2 der erste Teilbereich 10, welcher wieder durch den ersten Sendelichtstrahl S10 erzeugt ist, bezogen auf eine Größe seiner Querschnittsfläche d10 mit einer Vergrößerung des Abstands zum Reflexions-Lichttaster 100 abnimmt. Eine Größe der Querschnittsfläche d20 des zweiten Teilbereichs 20, welcher wieder durch den zweiten Sendelichtstrahl S20 erzeugt wird, nimmt mit der Vergrößerung des Abstandes zum Reflexions-Lichttaster 100 zu.

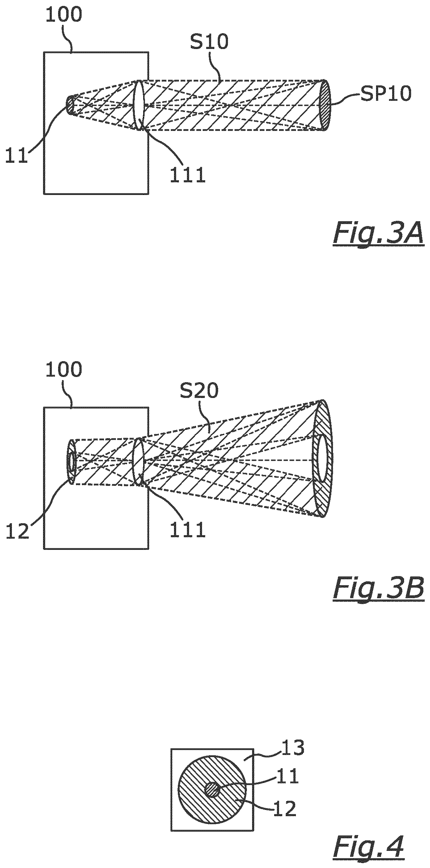

Fig. 3A zeigt eine beispielhafte schematische Darstellung eines Strahlenquerschnitts des ersten Sendelichtstrahls S10 gemäß der Ausführungsform von Fig. 1. Der dargestellte Strahlenquerschnitt verdeutlicht den Strahlenverlauf im Lichttaster 100 sowie im Überwachungsbereich. In der rein schematischen Darstellung sind die Dimensionen nicht in den erwarteten Proportionen dargestellt. Die erste Sendeeinheit 11, welche den ersten Sendelichtstrahl S10 aussendet, ist übergroß dargestellt. Demgegenüber ist die Abbildung des Sendespots SP10 auf einem beispielhaften Objekt in einem verhältnismäßig kurzen Abstand gezeigt. Zudem ist eine Linse 111 als Teil einer Optik des Lichttasters 100 dargestellt. Die Linse 111 bewirkt beispielsweise eine Parallelrichtung des ersten Sendelichtstrahls S10.

Fig. 3B zeigt eine beispielhafte schematische Darstellung eines Strahlenquerschnitts des zweiten Sendelichtstrahls S20 gemäß der Ausführungsform von Fig. 1. Die ringförmig ausgeführte zweite Sendeeinheit 12 erzeugt den zweiten Sendelichtstrahl S20 unter Zuhilfenahme der Linse 111.

Fig. 4 zeigt schematisch eine beispielhafte Ausführungsform eines Lichtsenders wie vorgeschlagen. Dieser kann beispielsweise dazu eingesetzt werden, die Strahlengänge von Fig. 3A und 3B zu erzeugen. Der Lichtsender umfasst die erste Sendeeinheit 11 und die zweite Sendeeinheit 12. Im gezeigten Ausführungsbeispiel sind die erste und die zweite Sendeeinheit 11, 12 jeweils als eine Zone einer Mehrzonenleuchtdiode realisiert. Dabei ist die erste Sendeeinheit 11 mittig angeordnet, während die zweite Sendeeinheit 12 die erste Sendeeinheit 11 ringförmig umgibt. Beide Zonen sind auf einem LED-Chip 13 implementiert. Ein Durchmesser der zweiten Sendeeinheit 12 ist größer, beispielsweise um den Faktor 4, als ein Durchmesser der ersten Sendeeinheit 11. Die Größenverhältnisse können jedoch auch anders gewählt werden.

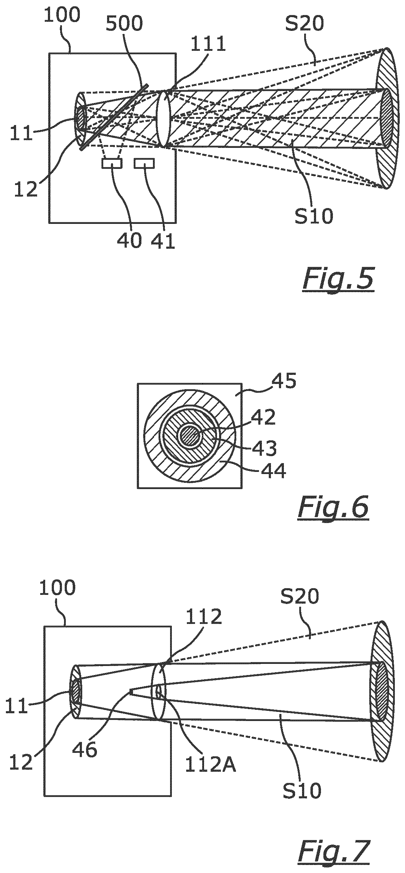

Fig. 5 zeigt eine weitere beispielhafte Ausführungsform des Reflexions-Lichttasters 100 wie vorgeschlagen. Der Lichttaster 100 wird hier in einer Autokollimationsanordnung betrieben. Dazu umfasst der Lichttaster 100 zusätzlich einen Lichtleiter in Form des Strahlteilers 500, welcher das erste und das zweite Empfangslicht auf das lichtempfindliche Empfangselement 40 des Lichtempfängers leitet. Optional kann ein Übersprechfilterelement 41 vorgesehen sein. Dieses ist hier ausgeführt als weiteres lichtempfindliches Element, welches außerhalb des Empfangsbereichs des ersten und des zweiten Empfangslichts angeordnet ist und das Streulicht erfasst. Somit kann ein Übersprechen eliminiert werden.

Fig. 6 zeigt eine beispielhafte Ausführungsform eines Lichtempfängers wie vorgeschlagen. Der Lichtempfänger ist hier beispielhaft als Mehrsegmentfotodiode, die auf einem Chip 45 implementiert ist, ausgeführt. Eine erste Fotodiode 42 ist zum Empfangen des ersten Empfangslichts ausgelegt. Dies kann als das eigentliche Nutzsignal bezeichnet werden. Eine zweite Fotodiode 43 ist zum Empfangen des zweiten Empfangslichts ausgelegt, welches die Remission des zweiten Sendelichts an einem Objekt repräsentiert. Optional ist eine dritte Fotodiode 44 vorgesehen, welche das Streulicht empfängt, um Übersprechen zu kompensieren. Sofern die erste und zweite Sendeeinheit alternierend den ersten und zweiten Sendelichtstrahl aussenden, kann die zweite Fotodiode 43 zusätzlich Streulicht dann erfassen, wenn nur der erste Sendelichtstrahl aktiv ist. In diesem Fall kann die dritte Fotodiode 44 entfallen.

Fig. 7 zeigt eine weitere beispielhafte Ausführungsform eines Reflexions-Lichttasters wie vorgeschlagen. In dieser Ausführungsform ist der Lichtempfänger 46 koaxial zum Lichtsender, welcher die erste und die zweite Sendeeinheit 11, 12 umfasst, angeordnet. Bei dieser Ausführungsform ist eine weitere Linse 112 vorgesehen, deren innerer Teil 112A optisch abgeschirmt von dem ersten und dem zweiten Sendelichtstrahl S10, S20 für den Lichtempfänger 46 verwendet wird. Der im Zentrum der Linse 112 befindliche Empfangsteil 112A ist an den Lichtempfänger 46 angepasst.

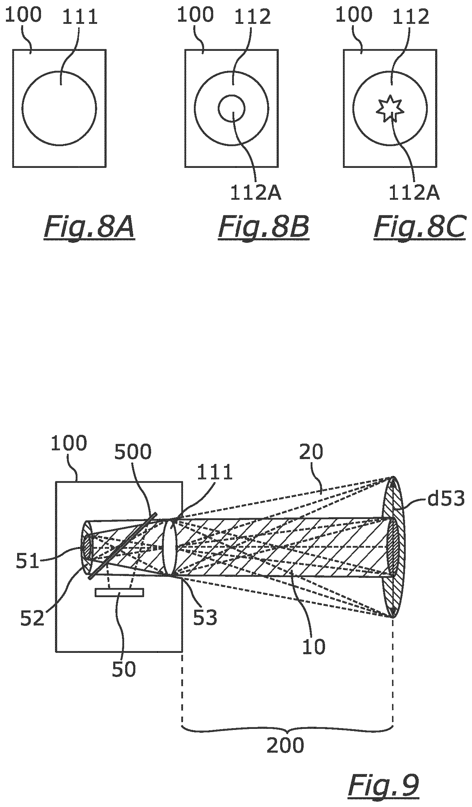

Fig. 8A zeigt eine beispielhafte Ausgestaltung einer Frontseite des vorgeschlagenen Lichttasters 100 mit einer kreisförmigen Linse 111. Diese Ausführung kann beispielsweise in Verbindung mit den in den Figuren 3A, 3B und 5 gezeigten Ausführungsformen des Reflexions-Lichttasters eingesetzt werden.

Vorteilhafterweise wird die Linse 111 passend zum Lichtsender wie in Fig. 4 dargestellt kreisrund ausgeführt, wodurch eine Richtungsabhängigkeit der Detektion weiter verringert wird.

Fig. 8B zeigt eine weitere beispielhafte Ausgestaltung einer Frontseite des vorgeschlagenen Lichttasters 100. Hier ist die Linse 112 mit dem Empfängerbereich 112A gezeigt, welche beispielsweise in der koaxialen Anordnung des Lichttasters gemäß Fig. 7 verwendet wird.

Fig. 8C zeigt eine weitere beispielhafte Frontansicht des Lichttasters 100 mit Linse 112. Hier ist der zentrale oder innere Bereich 112A der Linse 112, welcher im optischen Pfad vor dem Lichtempfänger angeordnet ist, sternförmig ausgeführt.

Fig. 9 zeigt eine weitere beispielhafte Ausführungsform eines Reflexions-Lichttasters wie vorgeschlagen. Hier sind im Vergleich zur Fig. 5 die Rollen von Lichtsender und Lichtempfänger vertauscht. Ein Lichtsender 50 erzeugt das Sendelicht, welches durch Reflexion an dem Strahlleiter 500, hier als halbdurchlässiger Spiegel 500 ausgeführt, über die Linse 111, sowie die Sendeöffnung 53 in den Überwachungsbereich 200 emittiert wird. Des Weiteren ist ein Lichtempfänger mit einem ersten und einem zweiten lichtsensitiven Element 51, 52 vorgesehen, welche hinter dem halbdurchlässigen Spiegel 500 angebracht sind. Der Sendespot des Sendelichts deckt also den gesamten Durchmesser 53 ab. Das zweite lichtsensitive Element 52 des Lichtempfängers bildet durch seine Oberfläche die zweite Empfangsöffnung, welche größenmäßig mit der Sendeöffnung 53 des Lichttasters übereinstimmt. Die Größe des Lichtsenders 50 (oder zumindest der Lichtaustrittsfläche des Lichtsenders 50) entspricht der Fläche von erstem und zweitem lichtsensitiven Element 51, 52 zusammengenommen.

Das erste lichtsensitive Element 51 des Lichtempfängers besitzt eine im Vergleich dazu geringere Öffnung, welche die erste Empfangsöffnung repräsentiert. Durch die zwei unterschiedlich großen Empfangsöffnungen wird der erster und der zweite Teilbereich 10, 20 erzeugt. Das Sensorsignal wird wiederum in Abhängigkeit des Verhältnisses zwischen zweitem und erstem Empfangslicht bereitgestellt.

### Bezugszeichenliste

- 10, 20: Teilbereich
- S10, S20: Sendelichtstrahl
- d10, d20, d53: Querschnittsfläche
- 31: Objekt
- SP10: Sendespot
- 13, 45: Chip
- 40: lichtempfindliches Element
- 41: Übersprechfilterelement
- 42, 43, 44: Fotodiode
- 46: Lichtempfänger
- 50: Lichtsender
- 51, 52: lichtsensitives Element
- 100: Reflexions-Lichttaster
- 111, 112: Linse
- 112A: Empfangsbereich
- 200: Überwachungsbereich
- 500: Strahlleiter

## Patentansprüche

1. Reflexions-Lichttaster zur Erfassung mindestens eines Objekts in einem Überwachungsbereich aufweisend einen Lichtsender (11, 12, 50) zum Aussenden von Sendelicht in den Überwachungsbereich (200) und einen Lichtempfänger (46) zum Empfangen von Empfangslicht aus dem Überwachungsbereich (200),
wobei der Reflexions-Lichttaster dazu eingerichtet ist, in dem Überwachungsbereich (200) zumindest einen ersten Teilbereich (10) und einen zweiten Teilbereich (20) zu erzeugen,
wobei der Lichtempfänger (46) dazu eingerichtet ist, Empfangslicht aus dem ersten Teilbereich (10) als erstes Empfangslicht und Empfangslicht aus dem zweiten Teilbereich (20) als zweites Empfangslicht zu erfassen, wobei der Reflexions-Lichttaster des Weiteren dazu eingerichtet ist, durch Ermitteln eines Intensitätsverhältnisses zwischen dem ersten und dem zweiten Empfangslicht ein Sensorsignal bereitzustellen, welches eine Funktion eines Abstands des mindestens einen Objekts (31) von dem Reflexions-Lichttaster ist.

2. Reflexions-Lichttaster nach Anspruch 1,
wobei das Intensitätsverhältnis als Quotient oder als, insbesondere gewichtete, Differenz aus dem zweiten und dem ersten Empfangslicht gebildet ist und wobei das Sensorsignal als Ergebnis eines Vergleichs des Quotienten oder der Differenz mit einer einstellbaren Schaltschwelle des Reflexions-Lichttasters bereitgestellt ist.

3. Reflexions-Lichttaster nach dem vorstehenden Anspruch,
wobei die Schaltschwelle eine Hysterese umfasst.

4. Reflexions-Lichttaster nach einem der vorstehenden Ansprüche,
wobei eine Größe einer Querschnittsfläche des zweiten Teilbereichs (20) mit einer Vergrößerung eines Abstands zu dem Reflexions-Lichttaster zunimmt, und
wobei eine Größe einer Querschnittsfläche des ersten Teilbereichs (10) mit einer Vergrößerung des Abstands zu dem Reflexions-Lichttaster im Wesentlichen gleich bleibt oder abnimmt oder weniger stark als die Querschnittsfläche des zweiten Teilbereichs (20) zunimmt.

5. Reflexions-Lichttaster nach einem der vorstehenden Ansprüche,
wobei der Lichtsender eine erste und eine zweite Sendeeinheit (11, 12) aufweist, wobei die erste Sendeeinheit (11) zum Aussenden eines ersten Sendelichtstrahls (S10) eingerichtet ist, welcher den ersten Teilbereich (10) bildet,
wobei die zweite Sendeeinheit (12) zum Aussenden eines zweiten Sendelichtstrahls (S20) eingerichtet ist, welcher den zweiten Teilbereich (20) bildet, wobei der erste Sendelichtstrahl (S10) eine Querschnittsfläche (d10) aufweist, die sich von einer Querschnittsfläche (d20) des zweiten Sendelichtstrahls (S20) unterscheidet,
wobei eine jeweilige Intensität des ersten und des zweiten Empfangslichts jeweils eine Funktion der jeweiligen Querschnittsfläche (d10, d20) des ersten oder zweiten Sendelichtstrahls und einer Remission des ersten und des zweiten Sendlichtstrahls (S10, S20) an dem Objekt (31) ist.

6. Reflexions-Lichttaster nach dem vorherigen Anspruch,
wobei der erste Sendelichtstrahl (S10) und der zweite Sendelichtstrahl (S20) zumindest zeitweise alternierend gesendet werden.

7. Reflexions-Lichttaster nach Anspruch 5 oder 6,
wobei eine Position innerhalb des Lichtsenders, an welcher die erste Sendeeinheit (11) angeordnet ist, an eine Position innerhalb des Lichtsenders, an welcher die zweite Sendeeinheit (12) angeordnet ist, angepasst ist.

8. Reflexions-Lichttaster nach einem der Ansprüche 5 bis 7,
wobei eine Größe der Querschnittsfläche (d20) des zweiten Sendelichtstrahls (S20) größer als ein Sichtbereich des Lichtempfängers ist, und
wobei eine Größe des Sichtbereichs des Lichtempfängers an eine Größe der Querschnittsfläche (d10) des ersten Sendelichtstrahls (S10) angepasst ist.

9. Reflexions-Lichttaster nach einem der Ansprüche 5 bis 8,
wobei der erste Sendelichtstrahl (S10) entlang einer ersten optischen Achse ausgesendet wird und der zweite Sendelichtstrahl (S20) entlang einer zweiten optischen Achse ausgesendet wird, die mit der ersten optischen Achse im wesentlichen übereinstimmt oder parallel zu dieser verläuft.

10. Reflexions-Lichttaster nach einem der Ansprüche 5 bis 9,
wobei die erste Sendeeinheit (11) eine erste Leuchtdiode umfasst, und
wobei die zweite Sendeeinheit (12) eine zweite Leuchtdiode umfasst,
wobei die erste und die zweite Leuchtdiode konzentrisch zueinander angeordnet sind, oder
wobei die erste und die zweite Leuchtdiode als jeweils eine Zone einer Mehrzonenleuchtdiode realisiert sind.

11. Reflexions-Lichttaster nach einem der Ansprüche 5 bis 10,
wobei der Lichtempfänger ein lichtempfindliches Empfangselement (40) umfasst, welches zum Erfassen des ersten und zweiten Empfangslichts eingerichtet ist.

12. Reflexions-Lichttaster nach einem der Ansprüche 5 bis 11,
wobei der Lichtempfänger des Weiteren ein Übersprechfilterelement (41) aufweist, wobei das Übersprechfilterelement ein Polfilter umfasst, oder
wobei das Übersprechfilterelement ein weiteres lichtempfindliches Empfangselement aufweist, welches zum Erfassen von Streulicht eingerichtet ist.

13. Reflexions-Lichttaster nach einem der Ansprüche 5 bis 12,
wobei das lichtempfindliche Empfangselement (40) eine erste Fotodiode (42) umfasst, oder
wobei das lichtempfindliche Empfangselement die erste Fotodiode (42) und eine zweite Fotodiode (43) umfasst, welche konzentrisch zueinander angeordnet sind, und/oder als jeweils ein Segment einer Mehrsegmentfotodiode realisiert sind, oder
wobei das lichtempfindliche Empfangselement die erste Fotodiode (42) und eine dritte Fotodiode (44) umfasst, oder wobei das lichtempfindliche Empfangselement die erste, die zweite und die dritte Fotodiode (42, 43, 44) umfasst, wobei die dritte Fotodiode (44) zum Erfassen von Streulicht eingerichtet ist, wobei die erste und die zweite Fotodiode konzentrisch zueinander angeordnet sind und wobei die dritte Fotodiode konzentrisch zu der ersten und zweiten Fotodiode angeordnet ist, und/oder wobei die erste, die zweite und die dritte Fotodiode jeweils als ein Segment der Mehrsegmentfotodiode realisiert sind.

14. Reflexions-Lichttaster nach einem der Ansprüche 11 bis 13,
wobei der Lichtempfänger einen Strahlleiter (500) umfasst, welcher dazu angeordnet und eingerichtet ist, das erste und das zweite Empfangslicht auf das lichtempfindliche Empfangselement zu leiten, oder
wobei der Lichtempfänger koaxial zu dem Lichtsender angeordnet ist und mindestens eine Linse (112) aufweist, welche dazu ausgelegt ist, in zumindest einem Teilbereich (112A) den ersten und zweiten Sendelichtstrahl (S10, S20) von dem Empfangslicht abzuschirmen.

15. Reflexions-Lichttaster nach einem der Ansprüche 1 bis 4,
wobei der Lichtsender (50) zum Aussenden des Sendelichts eine Sendeöffnung (53) aufweist,
wobei der Lichtempfänger zum Empfangen des ersten Empfangslichts eine erste Empfangsöffnung aufweist und zum Empfangen des zweiten Empfangslichts eine zweite Empfangsöffnung aufweist,
wobei eine Größe der zweiten Empfangsöffnung an eine Größe der SendeÖffnung (53) angepasst ist,
wobei eine Größe der ersten Empfangsöffnung die Größe der zweiten Empfangsöffnung übersteigt,
wobei eine jeweilige Intensität des ersten und des zweiten Empfangslichts jeweils eine Funktion der jeweiligen Größe der ersten oder zweiten Empfangsöffnung und der Remission des ersten Sendelichts an dem Objekt ist.
